# EUROPÄISCHE PATENTSCHRIFT

(11) **EP 1 785 971 B1**
(45) Veröffentlichungstag und Bekanntmachung des Hinweises auf die Patenterteilung: **25.12.2013**
(21) Anmeldenummer: 06023225.3
(22) Anmeldetag: 08.11.2006
(51) Int. Cl.: G09F 23/00

(54) **Anzeigevorrichtung für elektrische Verteiler**
Display device for an electric distribution installation
Dispositif d'affichage pour installation de distribution électrique

(30) Priorität: 09.11.2005 DE 202005017651 U
(43) Veröffentlichungstag der Anmeldung: 16.05.2007
(73) Patentinhaber: Hager Electro GmbH & Co. KG, 66440 Blieskastel (DE)
(72) Erfinder: Chrim, Mahmoud, 33074 Fontanafredda / Pordenone (IT); Cubela, Tomislav, 6300 Zug (CH); Christen, Reto, 6012 Obernau (CH)
(74) Vertreter: Bernhardt, Winfrid

(56) Entgegenhaltungen:
- EP-A- 0 516 115
- EP-A- 1 186 972
- EP-A- 1 437 642
- DE-U1- 20 011 934

## Beschreibung

Die Erfindung betrifft einen elektrischen Verteiler, mit mehreren, von dem Verteiler ausgehende Stromkreise sichernden Sicherungsschaltern, denen jeweils eine Kennzeichnung räumlich zugeordnet ist.

Die Zweckbestimmung der Stromkreise eines elektrischen Verteilers, z.B. ihre Bestimmung für die Stromversorgung einzelner Bereiche eines Wohnhauses, wird herkömmlich durch Beschriftungen am Verteiler kenntlich gemacht. Häufig ist auf einem im Verteilerschrank innen angebrachten Blatt die Funktion der Stromkreise in Zuordnung zu Stromkreiskennzeichnungen aufgelistet. Während die Stromkreiskennzeichnungen durch Spritzgießen unverlierbar an Kunststoffteile des Verteilers angeformt sind, z.B. als Ziffern, besteht die Gefahr, dass Beschriftungen abhanden kommen oder bis zur Unleserlichkeit verwischt werden.

Aus der EP 1 437 642 A2 ist ein Bediengerät zum Beobachten und Bedienen eines technischen Prozesses bekannt, dass ein Display und einer Eingabetastatur aufweist. Auf dem Display sind Zeichen darstellbar, die über die Tastatur zur Darstellung in einem Prozesswert an anderer Stelle auf dem Display ausgewählt werden können. Die EP 0 156 115 A2 beschreibt eine in einem Verteilerschrank montierbare Schaltuhr mit einem Display und einem der Programmierung dienenden Tastenfeld. Zur Begrenzung der Abmessungen der Schaltuhr ist das Tastenfeld herauszieh- oder herausklappbar mit dem Schaltuhrgehäuse verbunden.
Aus der EP 1 186 972 A2 geht ein elektrisches Schaltgerät mit einem Bildschirm und einer Bedieneinheit hervor. Schaltfunktionen des Schaltgerätes können durch den Benutzer über eine menügeführte Benutzeroberfläche auf dem Bildschirm programmiert werden.
Die DE 200 11 934 U1 beschreibt ein Bedientableau mit einem Display und einer Bedieneinrichtung zur Vorprogrammierung der Betriebszeiten technischer Anlagen, wobei mehrere Anlagen auswählbar und Vorlaufzeiten einstellbar sind.

Der Erfindung liegt die Aufgabe zugrunde, den Nutzungskomfort elektrischer Verteileranlagen zu erhöhen.

Der diese Aufgabe lösende elektrische Verteiler nach der Erfindung ist gekennzeichnet durch eine Eingabeeinrichtung und ein Display umfassendes Anzeigegerät, in dem in einem Programmiermodus über die Eingabeeinrichtung in Zuordnung zu den betreffenden Kennzeichnungen eingegebene Zweckbestimmungen der Sicherungsschalter bzw. der durch diese gesicherten Stromkreise speicherbar sind und durch das in einem Anzeigemodus die betreffenden Kennzeichnungen und gespeicherten Zweckbestimmungen auf dem Display einander zugeordnet darstellbar sind.

Die Programmierung erfolgt jeweils im Anschluss an Installationsarbeiten. Die Angaben zur Zweckbestimmung sind dann gespeichert und auf Anforderung, in räumlicher Zuordnung zu der auf das Bauteil hinweisenden Kennzeichnung auf dem Display darstellbar.

Die Zweckbestimmungen betreffen in erster Linie durch die Stromkreise versorgte Bereiche, z.B. eines Wohnhauses, wie Küche, Bad, Wohnzimmer usw.

Das Display braucht nicht alle möglichen Kombinationen von Zweckbestimmungen und Kennzeichnungen gleichzeitig darzustellen, sondern einzelne Kombinationen können im Display aufeinander folgend darstellbar sein. Entsprechend reicht ein Display von geringer Größe aus.

In einer bevorzugten Ausführungsform der Erfindung zeigt das Anzeigegerät bei Eingabe der Zweckbestimmung die zugehörige Kennzeichnung an. Will z.B. der den Verteiler nutzende Stromverbraucher wissen, welcher der Sicherungsschalter zu einem bestimmten Bereich gehört, den er aus irgendeinem Grund abschalten möchte, so gibt er den betreffenden Bereich, z.B. "Bad", ein und die Kennzeichnung des zugehörigen Sicherungsschalters wird in Zuordnung zu "Bad" am Display angezeigt.

Die Programmierung lässt sich erleichtern, indem den Kennzeichnungen gespeicherte Standard-Zweckbestimmungen zuweisbar sind. Gespeichert sein können z.B. Zweckbestimmungsangaben, wie "Bad", "Küche", "Wohnzimmer" usw. Die betreffenden Angaben brauchen dann nicht buchstabenweise eingegeben zu werden.

In weiterer Ausgestaltung der Erfindung ist das Anzeigegerät durch eine mit einem Verteilergehäuse verbundene Geräteeinheit gebildet. Diese Geräteeinheit kann z.B. in eine Gehäuseabdeckung oder die Tür eines Verteilerschranks integriert sein.

In einer Ausführungsform der Erfindung ist die Geräteeinheit vom Verteilerschrank lösbar und im abgenommenen Zustand funktionsfähig, so dass sich die Geräteeinheit zur Programmierung bequem handhaben lässt.

Die Erfindung wird nachfolgen anhand eines Ausführungsbeispiels und der beiliegenden, sich auf dieses Ausführungsbeispiel beziehenden Zeichnungen näher erläutert. Es zeigen:
- Fig. 1: eine Teilansicht eines Verteilergehäuses mit einer Anzeigevorrichtung nach der Erfindung, und
- Fig. 2: eine in dem Verteilergehäuse von Fig. 1 die Anzeigevorrichtung bildende Geräteeinheit mit einer Tastatur und einem Display.

Eine Abdeckung 1 eines Verteilergehäuses weist eine Öffnung 2 auf, in welche in dem Verteilergehäuse installierte Sicherungsschalter 3 hineinragen, so dass von Außen Zugang zu den Schaltern besteht. Die Abdeckung 1 trägt als Kennzeichnung den einzelnen Sicherungsschaltern 3 zugeordnete Ziffern "1" bis "7".

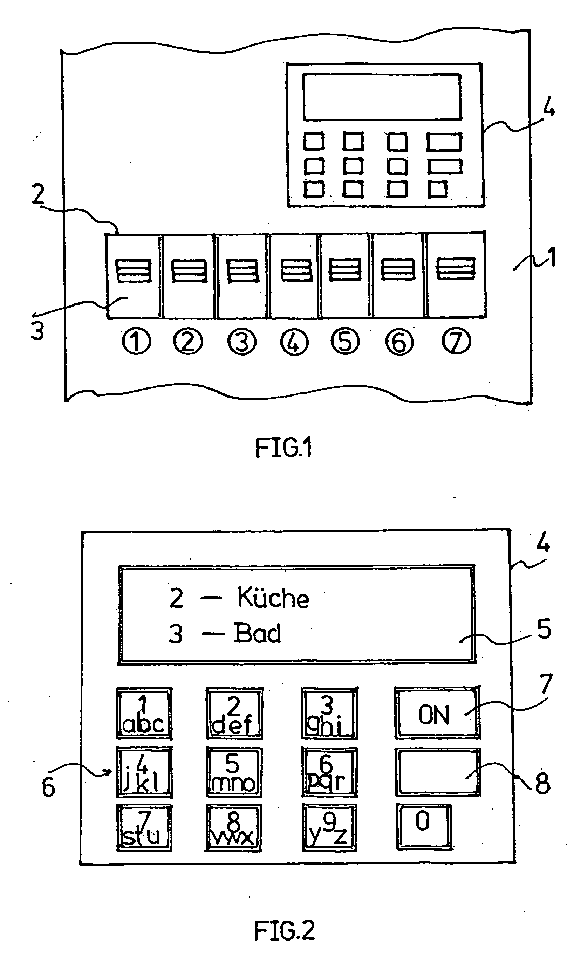

Oberhalb der Sicherungsschalter 3 ist eine in Fig. 2 gesondert dargestellte Geräteeinheit 4 angeordnet, welche, in dem gezeigten Ausführungsbeispiel, lösbar mit der Abdeckung 1 verbunden ist.

Die Geräteeinheit 4 weist ein Display 5 und eine Tastatur 6 auf. Die Tastatur 6 umfasst Tasten für die Ziffern "0" bis "9" sowie zwei Funktionstasten 7 und 8. Die Tasten für die Ziffern "1" bis "9" können in einem durch die Tasten 7 und 8 einstellbaren Programmiermodus auch zur Eingabe von Buchstaben verwendet werden.

Die Sicherungsschalter, denen die Ziffern "1" bis "7" zugeordnet sind, sichern jeweils einen Stromkreis ab. Bei der Installation einer elektrischen Anlage, z.B. in einem Wohnhaus, kann in die Geräteeinheit 4 die Zweckbestimmung der einzelnen Stromkreise bzw. Sicherungsschalter 3 in Zuordnung zur Kennzeichnung eingegeben werden.

Die Zweckbestimmung der Sicherungsschalter lässt sich vom Nutzer des Verteilers bzw. Stromverbraucher bei Bedarf abrufen. Der Stromverbraucher kann z.B. feststellen, welcher der Sicherungsschalter "1" bis "7" betätigt werden muss, um einen gewünschten Bereich des Hauses, z.B. das Bad, spannungsfrei zu schalten.

Durch wiederholtes Drücken der Funktionstaste 8 lassen sich die den Kennzeichnungen "1" bis "7" zugehörigen Stromkreisfunktionen nacheinander darstellen, wobei in dem betreffenden Ausführungsbeispiel jeweils zwei Funktionen und die zugehörige Kennzeichnung anzeigbar sind.

Vorteilhaft lässt sich die Geräteeinheit 4 bei einer Änderung der Installation entsprechend umprogrammieren.

## Patentansprüche

1. Elektrischer Verteiler, mit mehreren, von dem Verteiler ausgehende Stromkreise sichernden Sicherungsschaltern (3), denen jeweils eine Kennzeichnung räumlich zugeordnet ist,
**gekennzeichnet durch** ein eine Eingabeeinrichtung (6) und ein Display (5) umfassendes Anzeigegerät (4), in dem in einem Programmiermodus über die Eingabeeinrichtung (6) in Zuordnung zu den betreffenden Kennzeichnungen eingegebene Zweckbestimmungen der Sicherungsschalter (3) bzw. der **durch** diese gesicherten Stromkreise speicherbar und **durch** das in einem Anzeigemodus die betreffenden Kennzeichnungen und gespeicherten Zweckbestimmungen auf dem Display (5) einander zugeordnet darstellbar sind.

2. Verteiler nach Anspruch 1,
**dadurch gekennzeichnet,**
**dass** durch Eingabe einer der Kennzeichnungen die zugeordnete Zweckbestimmungen oder/und durch Eingabe einer der gespeicherten Zweckbestimmungen die zugehörige Kennzeichnung anzeigbar ist.

3. Verteiler nach Anspruch 1 oder 2,
**dadurch gekennzeichnet,**
**dass** in dem Programmiermodus den betreffenden Kennzeichnungen in dem Anzeigegerät (4) gespeicherte Standard-Zweckbestimmungen zuweisbar sind.

4. Verteiler nach einem der Ansprüche 1 bis 3,
**dadurch gekennzeichnet,**
**dass** das Anzeigegerät durch eine mit einem Verteilerschrank (1) verbundene Geräteeinheit (4) gebildet ist.

5. Anzeigevorrichtung nach Anspruch 4,
**dadurch gekennzeichnet,**
**dass** die Geräteeinheit (4) von dem Verteilerschrank (1) abnehmbar und im abgenommenen Zustand funktionsfähig ist.

## Claims

1. Electrical distribution board having a plurality of fuse switches (3) which fuse electrical circuits starting from the distribution board and which each have a physically associated identifier,
**characterized by** a display device (4) which comprises an input device (6) an a display (5) and in which intended purposes of the fuse switches (3) or of the electrical circuits which are fused by the said fuse switches can be stored, said intended purposes being input in association with the relevant identifiers by means of the input device (6) in a programming mode, and it being possible for the relevant identifiers and stored intended purposes to be displayed on the display (5) such that they are associated with one another by the said display device in a display mode.

2. Distribution board according to Claim 1, **characterized in that** the associated intended purposes can be displayed by inputting one of the identifiers or/and the associated identifier can be displayed by inputting one of the stored intended purposes.

3. Distribution board according to Claim 1 or 2, **characterized in that** standard intended purposes which are stored in the display device (4) can be allocated to the relevant identifiers in the programming mode.

4. Distribution board according to one of Claims 1 to 3, **characterized in that** the display device is formed by a device unit (4) which is connected to a distribution cabinet (1).

5. Display apparatus according to Claim 4, **characterized in that** the device unit (4) can be removed from the distribution cabinet (1) and is functional in the removed state.

## Revendications

1. Distributeur électrique, comprenant plusieurs commutateurs de sécurité (3) sécurisant les circuits électriques partant du distributeur et auxquels sont associés respectivement des marquages dans l'espace, **caractérisé par** un appareil indicateur (4) comprenant un moyen de saisie (6) et un affichage (5), dans lequel, dans un mode de programmation, des affectations, saisies via le moyen de saisie (6) en association aux marquages concernés, des commutateurs de sécurisé (3) ou des circuits électriques sécurisés par ceux-ci, peuvent être mémorisées et au moyen duquel, dans un mode d'affichage, les marquages concernés et les affectations mémorisées sont susceptibles d'être présentés sur l'affichage (5) en association mutuelle.

2. Distributeur selon la revendication 1,
**caractérisé en ce que**, en saisissant l'un des marquages, il est possible d'afficher les affectations associées et/ou en saisissant l'une des affectations mémorisées il est possible d'afficher le marquage associé.

3. Distributeur selon la revendication 1 ou 2,
**caractérisé en ce que**, dans le mode de programmation, il est possible d'attribuer des affectations standard mémorisées dans l'appareil indicateur (4) aux marquages concernés.

4. Distributeur selon l'une des revendications 1 à 3,
**caractérisé en ce que** l'appareil indicateur est formé par une unité d'appareil (4) reliée à une armoire de distributeur (1).

5. Dispositif indicateur selon la revendication 4,
**caractérisé en ce que** l'unité d'appareil (4) est susceptible d'être enlevée par rapport à l'armoire de distributeur (1) et capable de fonctionner dans la situation enlevée.
